# FASCICULE DE BREVET EUROPEEN

(11) **EP 0 500 408 B1**
(45) Date de publication et mention de la délivrance du brevet: **06.09.1995**
(21) Numéro de dépôt: 92400256.1
(22) Date de dépôt: 31.01.1992
(51) Int. Cl.: F16D 23/06

(54) **Synchroniseur à dentures de moyeu et de baladeur étagées**
Synchronisiervorrichtung mit gestuften Zähnen an Nabe und Schaltmuffe
Synchroniser with stepped teeth on hub and actuating sleeve

(30) Priorité: 19.02.1991 FR 9101924
(43) Date de publication de la demande: 26.08.1992
(73) Titulaire: REGIE NATIONALE DES USINES RENAULT S.A., 92109 Boulogne Billancourt (FR)
(72) Inventeur: Membrives, Joseph, F-78170 La Celle Saint-Cloud (FR); Saint-Jean, Alain, F-92290 Chatenay-Malabry (FR); Sivori, Lucien, F-78000 Versailles (FR)

(56) Documents cités:
- DE-B- 1 030 692
- FR-A- 1 044 974
- FR-A- 1 225 049
- FR-A- 1 247 403
- GB-A- 615 325
- GB-A- 2 057 608
- US-A- 2 364 331
- US-A- 4 727 968

## Description

La présente invention se rapporte à un synchroniseur de boîte de vitesses manuelle du type comportant d'une part un moyeu fixé sur un arbre rotatif de la boîte, et d'autre part un baladeur guidé en coulissement axial sur le moyeu par la denture extérieure de celui-ci.

Par la publication GB 615.325, on connaît un synchroniseur de ce type, dont le moyeu est muni de dents de longueurs différentes, et dont le baladeur présente des entrées de denture en retrait par rapport aux faces d'appui de celui-ci, et décalées axialement les unes par rapport aux autres.

La présente invention vise à améliorer le confort des véhicules lors des passages de vitesses, en réduisant les sensations désagréables de points durs, de craquements ou de frottements éprouvés par le conducteur au travers de son levier

Elle concerne un synchroniseur de boîte de vitesses comportant d'une part un moyeu fixé sur un arbre rotatif de la boîte, et d'autre part un baladeur guidé en coulissement axial sur le moyeu par la denture extérieure de celui-ci présentant des secteurs de longueur supérieure alternés avec des secteurs de longueur inférieure, et muni lui-même d'une denture d'accouplement dont les entrées décalées axialement les unes par rapport aux autres rencontrent la denture d'un anneau de synchronisation avant de s'engager dans la denture complémentaire d'un pignon de vitesses. Ce synchroniseur est caractérisé en ce que les dents de longueur supérieure du moyeu recouvrent certains secteurs de l'anneau lors de rapprochement de ces deux éléments, et assurent le guidage du baladeur lorsque la vitesse est engagée, tandis que les entrées de denture du baladeur sont saillantes par rapport aux faces d'appui du baladeur de façon à augmenter le guidage de celui-ci et à éviter son basculement sur le moyeu.

L'invention sera mieux comprise à la lecture de la description suivante d'un mode de réalisation particulier de celle-ci, en liaison avec les dessins annexés sur lesquels :
- la figure 1 est une coupe longitudinale simplifiée du synchroniseur de l'invention,
- la figure 2 est une vue de dessus du synchroniseur, selon la flèche A, et projetée sur un plan.

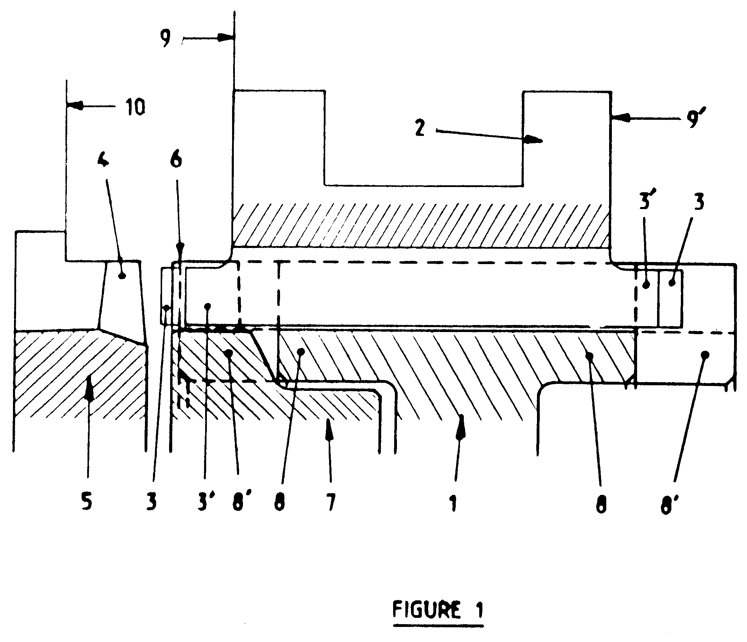

Le synchroniseur représenté sur la figure 1 comporte un moyeu 1 fixé sur un arbre rotatif de boîte de vitesses non représenté. Le baladeur 2 est solidaire en rotation du moyeu 1, et mobile en direction axiale sur celui-ci sous l'action d'une fourchette de commande non représentée. Lors de l'enclenchement d'une vitesse il vient en prise par sa denture d'accouplement 3,3′, avec celle du crabotage 4 d'un pignon fou de vitesse 5, après avoir rencontré un anneau de synchronisation 7. Pour des raisons de clarté, un seul anneau de synchronisation 7 apparaît sur la figure 1, mais le synchroniseur peut en comporter un second, disposé symétriquement au premier par rapport au moyeu 1.

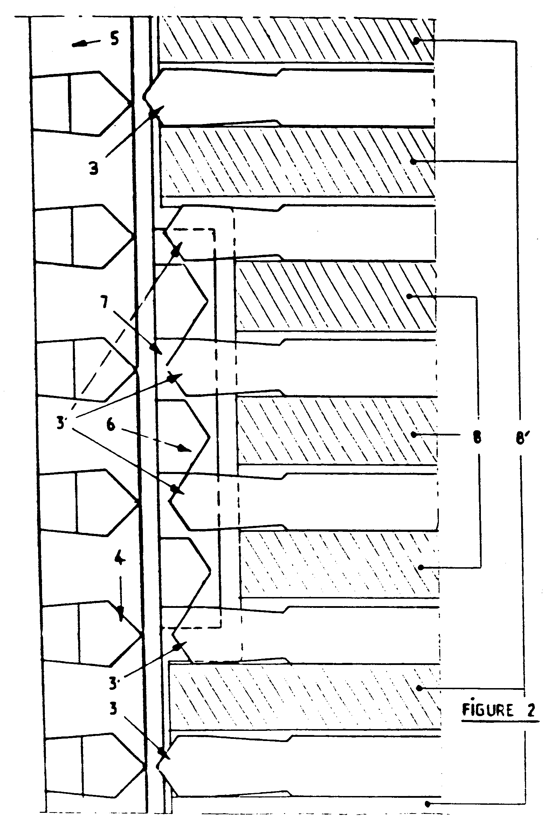

Les dents d'accouplement du baladeur 3,3′ présentent deux longueurs différentes en direction du pignon. Ce décalage des entrées de denture est mis en évidence par la figure 2. Il a pour but de permettre un engagement étagé du baladeur 2 sur le pignon 5. Les dents 3′ de longueur inférieure rencontrent les dents 6 de l'anneau 7 pour réaliser les phases d'indexage, d'interdiction, de synchronisation, puis simultanément à la phase de désinterdiction, les dents plus longues 3 du baladeur 2 arrivent au contact des dents 4 du pignon 5. La phase dite : "de vol libre" est très réduite et le crabotage du baladeur 2 peut s'effectuer sur le pignon 5.

La présente invention prévoit que la denture extérieure du moyeu assurant le guidage du baladeur 2 le long de celui-ci présente des dents de longueur différente 8,8′, en direction du pignon 5. Des groupes de dents 8′ équidistants, de longueur supérieure en direction du pignon sont ainsi alternés régulièrement sur la périphérie du moyeu, avec des groupes de dents 8 de longueur inférieure également équidistants.

Les secteurs de dents plus longues 8′ garantissent une augmentation du guidage du baladeur 2 sur le moyeu 1. Chaque anneau de synchronisation présente par ailleurs sur sa périphérie des secteurs pourvus de dent 6 alternés régulièrement avec des secteurs non dentés. La répartition de ces secteurs dentés et non dentés correspond à celle des groupes de dents 8 et 8′ sur le moyeu 1 du synchroniseur. Les secteurs non dentés de l'anneau 7 pourront ainsi être recouverts par les dents de longueur supérieure 8′ du moyeu 1 lors du rapprochement de ces deux éléments. Enfin on remarquera sur la figure 1 que les entrées de denture 3 et 3′ sont saillantes par rapport aux faces d'appui 9 et 9′ du baladeur 2. La course de déplacement du baladeur 2 est limitée par la face d'appui 10 située sur la denture 4 du pignon 5.

La présence de secteurs de dents plus longues 8′ sur le moyeu 1 faisant l'objet de l'invention, assure un meilleur guidage du baladeur 2 sur celui-ci quelque soit la position du baladeur 2, et particulièrement lorsque la vitesse est engagée. Cette caractéristique supprime le basculement du baladeur 2 sur le moyeu 1. Par ailleurs, l'étagement des dentures 8 et 8′ facilite la réalisation de "l'indexage" de l'anneau de synchronisation 7 sur le moyeu 1.

L'application des entrées de denture décalées sur un baladeur de synchronisation ne se limite pas aux seuls baladeurs ayant une denture saillante.

L'invention permet également de loger axialement deux anneaux de synchronisation dans l'épaisseur du moyeu, et de réduire l'encombrement du synchroniseur en direction axiale. Ce dernier point peut avantageusement être mis à profit pour réaliser des courses de passage de vitesse plus courtes. Enfin grâce à l'invention, la phase de "vol libre", ressentie comme un flottement du mécanisme de changement de vitesse par le conducteur, est réduite.

## Revendications

1. Synchroniseur de boîte de vitesses comportant d'une part un moyeu (1) fixé sur un arbre rotatif de la boîte, et d'autre part un baladeur (2) guidé en coulissement axial sur le moyeu (1) par la denture extérieure (8, 8') de celui-ci présentant des secteurs de longueur supérieure (8') alternés avec des secteurs de longueur inférieure (8), et muni lui-même d'une denture d'accouplement (3, 3') dont les entrées décalées axialement les unes par rapport aux autres rencontrent la denture (6) d'un anneau de synchronisation (7) avant de s'engager dans la denture complémentaire (4) d'un pignon de vitesses (5), caractérisé en ce que les dents de longueur supérieure (8') du moyeu (1) recouvrent certains secteurs de l'anneau (7) lors de rapprochement de ces deux éléments, et assurent le guidage du baladeur (2) lorsque la vitesse est engagée, tandis que les entrées de denture (3, 3') du baladeur (2) sont saillantes par rapport aux faces d'appui (9, 9') du baladeur (2) de façon à augmenter le guidage de celui-ci et à éviter son basculement sur le moyeu (1).

2. Synchroniseur selon la revendication 1, caractérisé en ce que les dents de guidage extérieurs 8,8′ du moyeu 1 sont regroupées selon des secteurs équidistants de dents de longueur supérieure 8′, alternés avec des secteurs équidistants de dents de longueur inférieure 8.

3. Synchroniseur selon les revendications 1 ou 2, caractérisé en ce que les entrées de denture du baladeur (3 et 3′) sont saillantes par rapport aux faces d'appuis (9) du baladeur (2) et (10) du pignon (5) qui limitent la course du baladeur en direction du pignon de vitesse (5), pour augmenter le guidage du baladeur (2) afin de supprimer le basculement de ce dernier sur le moyeu (1).

4. Synchroniseur selon les revendications 1, 2 ou 3, caractérisé en ce que chaque anneau de synchronisation (7) présente des secteurs pourvus de dents (6) alternés avec des secteurs non dentés.

5. Synchroniseur selon la revendication 4 caractérisé en ce que les secteurs non dentés de l'anneau de synchronisation 7 sont recouverts par les secteurs dentés les plus longs, du moyeu.

## Claims

1. A gearbox synchroniser comprising on the one hand a hub (1) fixed on a rotary shaft of the box and on the other hand a sliding sleeve (2) guided for axial sliding movement on the hub (1) by the outside tooth arrangement (8, 8') of the hub having sectors of greater length (8') which are alternated with sectors of shorter length (8) and itself provided with a coupling tooth arrangement (3, 3') of which the entries which are axially displaced relative to each other meet the tooth arrangement (6) of a synchronising ring (7) before engaging into the complementary tooth arrangement (4) of a gear pinion (5), characterised in that the teeth of greater length (8') of the hub (1) cover certain sectors of the ring (7) when those two elements move towards each other and provide for guiding the sliding sleeve (2) when the gear is engaged while the tooth arrangement entries (3, 3') of the sliding sleeve (2) are in projecting relationship with the contact faces (9, 9') of the sliding sleeve so as to increase the guidance thereof and to avoid tilting thereof on the hub (1).

2. A synchroniser according to claim 1 characterised in that the outside guide teeth (8, 8') of the hub (1) are grouped in accordance with equidistant sectors of teeth of greater length (8'), which sectors are alternated with equidistant sectors of teeth of shorter length (8).

3. A synchroniser according to claim 1 or claim 2 characterised in that the tooth arrangement entries of the sliding sleeve (3 and 3') are in projecting relationship with respect to the contact faces (9) of the sliding sleeve (2) and (10) of the pinion (5) which limit the travel movement of the sliding sleeve in the direction of the gear pinion (5) to increase the guidance of the sliding sleeve (2) in order to eliminate tilting movement of the latter on the hub (1).

4. A synchroniser according to claims 1, 2 or 3 characterised in that each synchronising ring (7) has sectors provided with teeth (6) which are alternated with untoothed sectors.

5. A synchroniser according to claim 4 characterised in that the untoothed sectors of the synchronising ring (7) are covered by the longer toothed sectors of the hub.

## Patentansprüche

1. Synchronisiervorrichtung für Schaltgetriebe, mit einerseits einer Nabe (1), die an einer Drehwelle des Getriebes befestigt ist, und, andererseits, einer in Axialrichtung gleitend an der Nabe (1) durch eine Außenzahnung (8, 8') an ihr geführten Schaltmuffe (2), welche abwechselnd Abschnitte größerer Länge (8') und Abschnitte geringerer Länge (8) aufweist, sowie eine Kopplungsverzahnung (3, 3') aufweist, deren axial zueinander verschiebbare Aufnahmen in Eingriff mit der Verzahnung (6) eines Synchronisierringes (7) gelangen, bevor sie in die komplementäre Verzahnung (4) eines Gangritzels eingreift, dadurch gekennzeichnet, daß die Zähne mit der größeren Länge (8') der Nabe (1) bestimmte Abschnitte des Ringes (7) bei Annäherung dieser beiden Teile aneinander bedecken und die Führung der Schaltmuffe (2) beim Gangeingriff gewährleisten, während die Aufnahmen der Verzahnung (3, 3') der Schaltmuffe (2) bezüglich der Auflageflächen (9, 9') der Schaltmuffe (2) derart hervorspringend angeordnet sind, daß deren Führung verbessert wird und ihr Verschwenken um die Nabe (1) verhindert wird.

2. Synchronisiervorrichtung nach Anspruch 1, dadurch gekennzeichnet, daß die äußeren Führungszähne (8, 8') der Nabe (1) in im gleichen Abstand zueinander angeordnete Gruppen mit Zähnen größerer Länge (8') unterteilt sind, welche sich mit im gleichen Abstand voneinander angeordneten Abschnitten mit Zähnen geringerer Länge (8) abwechseln.

3. Synchronisiervorrichtung nach Ansprüchen 1 oder 2, dadurch gekennzeichnet, daß die Aufnahmen der Verzahnung (3, 3') der Schaltmuffe hervorspringend bezüglich der Auflageflächen (9) der Schaltmuffe (2) und des Ritzels (5) angeordnet sind, welche den weg der Schaltmuffe in Richtung des Geschwindigkeitsritzels (5) begrenzen, zur Verbesserung der Führung der Schaltmuffe (2) im Hinblick auf eine Unterdrückung ihrer Verschwenkung um die Nabe (1).

4. Synchronisiervorrichtung nach Ansprüchen 1, 2 oder 3, dadurch gekennzeichnet, daß jeder Synchronisierring (7) mit Zähnen (6) versehene Abschnitte aufweist, die sich mit nicht gezahnten Abschnitten abwechseln.

5. Synchronisiervorrichtung nach Anspruch 4, dadurch gekennzeichnet, daß die nicht gezahnten Abschnitte des Synchronisierringes (7) von den Abschnitten mit den längeren Zähnen der Habe bedeckt sind.
